# EUROPÄISCHE PATENTSCHRIFT

(11) **EP 2 380 774 B1**
(45) Veröffentlichungstag und Bekanntmachung des Hinweises auf die Patenterteilung: **07.09.2016**
(21) Anmeldenummer: 11003272.9
(22) Anmeldetag: 19.04.2011
(51) Int. Cl.: B60Q 1/08, G06K 9/00, F21S 8/10

(54) **Verfahren zu Steuerung eines Scheinwerfersystems eines Kraftfahrzeugs und Kraftfahrzeug**
Method for controlling a headlamp system of a motor vehicle and motor vehicle
Procédé de commande d'un système de phare d'un véhicule automobile et véhicule automobile

(30) Priorität: 21.04.2010 DE 102010015731
(43) Veröffentlichungstag der Anmeldung: 26.10.2011
(73) Patentinhaber: Audi AG, 85045 Ingolstadt (DE)
(72) Erfinder: Bär, Michael, 85049 Ingolstadt (DE); Reichel, Michael, 85049 Ingoldstadt (DE)
(74) Vertreter: Thielmann, Frank

(56) Entgegenhaltungen:
- EP-A1- 1 780 462
- EP-A2- 1 506 893
- WO-A1-2006/015894
- WO-A1-2008/154736
- WO-A1-2009/112910
- DE-A1- 10 148 070
- DE-A1- 10 238 936
- DE-A1- 10 341 429

## Beschreibung

Die Erfindung betrifft ein Verfahren zur Steuerung eines Scheinwerfersystems eines Kraftfahrzeugs, umfassend wenigstens einen Schweinwerfer mit einem in der lokalen Lichtintensität veränderbaren Ausleuchtbereich, sowie ein zugehöriges Kraftfahrzeug.

In letzter Zeit werden vermehrt Schweinwerfersysteme in Kraftfahrzeugen vorgeschlagen, bei denen die Ausleuchtbereiche in ihrer lokalen Lichtintensität veränderbar sind. Das bedeutet, das Fahrlicht kann im Hinblick auf die Geometrie der tatsächlich ausgeleuchteten Bereiche im Vorfeld des Kraftfahrzeugs sowie im Hinblick auf die Lichtintensität in den ausgeleuchteten Bereichen angepasst werden. Dabei kann beispielsweise vorgesehen sein, dass die Ansteuerung des Scheinwerfersystems, also die Adaption des Fahrlichts, in Abhängigkeit der Straßenkategorie sowie der Geschwindigkeit erfolgt, wobei dann beispielsweise die Geometrie des Ausleuchtbereichs angepasst werden kann. Bekannt ist zudem eine Anpassung der Geometrie des Ausleuchtbereiches an Kreuzungen sowie eine automatische Umschaltung von Fernlicht auf Abblendlicht bei Gegenverkehr. Es wurden auch Systeme vorgeschlagen, die gezielt das Blenden anderer Verkehrsteilnehmer vermeiden sollen, indem die Anwesenheit solcher Verkehrsteilnehmer detektiert wird und die Lichtemission in deren Richtung gänzlich oder zumindest teilweise unterdrückt wird.

Beispielsweise zur Detektion solcher Verkehrsteilnehmer, aber auch zur sonstigen Umfelderfassung, umfassen moderne Kraftfahrzeuge meist eine Umfeldsensorik, beispielsweise Kameras oder Entfernungssensoren wie beispielsweise Radar-Sensoren, die auf einer Laufzeitmessung bezüglich eines vom Sensor selbst aktiv ausgesandten Signals basieren können. So kann aufgrund bestimmter Kriterien beispielsweise festgestellt werden, ob ein entgegenkommendes Kraftfahrzeug oder dergleichen vorliegt.

Der Nachteil der bekannten Scheinwerfersysteme ist es, dass Blendeffekte durch stark reflektierende Flächen, beispielsweise Schilderbrücken, noch immer auftreten. Eine weitere Problematik liegt darin, dass eine schnelle Ermüdung des Fahrers bei Nachtfahrten durch die auftretenden starken Kontrastunterschiede resultieren kann. Dann können auch Objekte wie beispielsweise andere Verkehrsteilnehmer, insbesondere Fußgänger, direkt neben hochreflektiven Schildern oder dergleichen nur sehr schwer wahrgenommen werden.

In diesem Themenkreis wurde in der DE 10 2007 048 717 A1 vorgeschlagen, optische Lichterfassungseinrichtungen wie Kameras oder Lichtsensoren mit einer optischen Auswerteeinrichtung zu verwenden, um die Lichtintensität des reflektierten Scheinwerferlichts und die zugehörige Position derart zu bestimmen, dass die Scheinwerfer so eingestellt werden können, dass weniger Licht auf die stark reflektierenden Objekte fällt. Dieser Ansatz hat jedoch den massiven Nachteil, dass zu dem Zeitpunkt, zu dem festgestellt werden kann, dass die Gefahr einer Blendung oder eines starken Kontrastunterschieds für den Fahrer vorliegt, diese Blendung beziehungsweise dieser Kontrastunterschied bereits gegeben sind und daher letztlich der Effekt, der vermieden werden soll, bereits eingetreten sein muss.

EP 1 780 462 A1 offenbart ein Verfahren zur modulierten Ausleuchtung einer Straßenszene durch einen Scheinwerfer eines Automobils, bei dem durch eine Mehrzahl von Teilstrahlen, die jeweils einer Lichtquelle zugeordnet sind, ein Ausleuchtbereich gebildet wird. Dabei geht es auch um die Problematik, dass reflektierende Verkehrsschilder den Fahrer des eigenen Kraftfahrzeugs blenden können. Insgesamt wird mithin vorgeschlagen kritische Zonen zu bestimmen, die nicht oder hervorgehoben ausgeleuchtet werden sollen. Es wird vorgeschlagen, eine Lichtquelle eines Scheinwerfers und eine Detektionseinrichtung in eine einzige Vorrichtung zu integrieren, wobei es insbesondere möglich sein soll, dass neben dem normalen Scheinwerferlicht ein kurzer Puls ausgesendet wird, in der Ordnung weniger Millisekunden, der nicht durch das menschliche Auge detektierbar sein soll und dazu dienen soll, auch Objekte zu detektieren, die nicht ausgeleuchtet sind.

DE 101 48 070 A1 betrifft ein Verfahren zur Erkennung und Verfolgung von Objekten. Dabei soll bevorzugt ein Laserscanner verwendet werden, um Objekte in einem Umfeldmodell zuzuordnen. Die Zuordnung von Objekten zu Segmenten soll dadurch verbessert werden, dass weitere Eigenschaften der Objekte, möglicherweise umfassend auch die Reflektivität, bei der Zuordnung zu Segmenten berücksichtigt werden.

Der Erfindung liegt daher die Aufgabe zugrunde, ein Verfahren zur Ansteuerung eines Schweinwerfersystems anzugeben, mit welchem auf vorausschauende und einfach zu realisierende Weise eine Blendung des Fahrers vermieden und eine bessere Ausleuchtung erreicht werden kann.

Zur Lösung dieser Aufgabe sind bei einem Verfahren der eingangs genannten Art erfindungsgemäß die Merkmale des Anspruchs 1 vorgesehen.

Mit besonderem Vorteil können dabei Umfeldsensorsysteme verwendet werden, deren Umfeldsensoren ohnehin in dem Kraftfahrzeug verbaut sind. Denn der vorliegenden Erfindung liegt die Erkenntnis zugrunde, dass sich mittels derartiger Umfeldsensoren, die mit aktiv ausgesendeten Signalen arbeiten, nicht nur eine Entfernung über die Laufzeit des Signals bestimmen lässt, sondern auch die Reflektivität von Oberflächen. Mit anderen Worten lassen sich mithilfe solcher Umfeldsensorsysteme, die dann das Vorfeld des Kraftfahrzeugs abtasten, Reflektivitätsinformationen ermitteln, die eine Positionsinformation bezüglich eines Gegenstands sowie die Reflektivität des Gegenstands, beschrieben über einen Reflektivitätskoeffizienten, enthalten können. Anhand dieser Reflektivitätsinformationen kann beispielsweise eine Ansteuerung des Scheinwerfersystems derart erfolgen, dass die Anpassung der Lichtintensität so erfolgt, dass eine höhere Lichtintensität auf Flächen mit niedrigerem Reflektivitätskoeffizienten trifft und/oder eine niedrigere Lichtintensität auf Flächen mit höherem Reflektivitätskoeffizienten trifft. Es kann also vorgesehen sein, dass bei einem einen Grenzwert unterschreitenden/überschreitenden Wert für einen Reflektivitätskoeffizienten mehr/weniger Licht in den entsprechenden Bereich ausgesandt wird und/oder eine die Lichtintensität beschreibende Kennlinie mit den genannten Eigenschaften verwendet wird.

Auf diese Weise werden im Rahmen der vorliegenden Erfindung eine Vielzahl von Vorteilen erreicht. Beispielsweise wird die Sicherheit im Kraftfahrzeug erhöht, da der Fahrer vermindert geblendet wird und aufgrund geringerer Kontrastunterschiede eine geringere Ermüdung des Fahrers auftritt. Damit vereinfacht sich zudem für den Fahrer die Wahrnehmung von Objekten neben stark reflektierenden Objekten, beispielsweise Schildern oder Schilderbrücken. Weiterhin ist es möglich, dunkle Stellen, also Stellen mit einem geringen Reflektivitätskoeffizienten, gezielt stärker auszuleuchten und damit weiterhin die Sicherheit zu erhöhen. Es kann zudem Energie eingespart werden, wenn insgesamt weniger Leistung pro Fläche benötigt wird. Dies wiederum führt zu einer längeren Lebensdauer der Lichtquellen des Scheinwerfersystems. Insbesondere wird somit weiteres Potential des selektiven und in der Intensität anpassbaren Fahrlichts (teilweise auch als "Matrix-Beam" bezeichnet) genutzt.

Insbesondere erlaubt es das vorliegende Verfahren jedoch, Blendungen des Fahrers, bevor diese geschehen, zu vermeiden beziehungsweise dunkle Objekte frühzeitig auszuleuchten. Dies wird erreicht, indem zur Detektion stark beziehungsweise schwach reflektierender Oberflächen nicht das Scheinwerferlicht selber eingesetzt wird, sondern die weitreichenderen, von den Sensoren des Umfeldsensorsystems eingesetzten Signale. Insbesondere kann dies, wie oben beschrieben, erreicht werden, indem von ohnehin im System verbauten Sensoren ermittelbare Zusatzinformationen, die diese Sensoren liefern, genutzt werden.

Die Ausleuchtbereiche werden vorab konditioniert und jegliche Blendung vermieden.

Es kann ein wenigstens einen Lidarsensor und/oder wenigstens einen Lasersensor und/oder wenigstens einen PMD-Sensor umfassendes Umfeldsensorsystem verwendet werden, wobei erfindungsgemäß Lasersensoren und PMD-Sensoren bevorzugt verwendet werden. Sowohl ein Lasersensor als auch ein PMD-Sensor (photonic mixer device), oft auch Fotomischdetektor genannt, arbeiten mit Licht, also letztlich einem Lichtlaufzeitverfahren. Die Messobjekte werden von Lichtimpulsen angeleuchtet und die Signallaufzeit gemessen, wobei zusätzlich über die Intensität des reflektierten Lichtsignals vorteilhaft auch die allgemeine Lichtreflektivität abgeleitet werden kann.

Erfindungsgemäß kann eine in den Messdaten enthaltene Abstandsinformation zur Ermittlung der Reflektivitätsinformation berücksichtigt werden. Diese kann folglich genutzt werden, um beispielsweise den Ort zu bestimmen, an dem sich die reflektierende Fläche befindet. Zweckmäßigerweise können zur Ermittlung der Reflektivitätsinformationen, insbesondere bei Verwendung wenigstens eines in einer Raumrichtung defokussierten Sensors, Messdaten zu verschiedenen Zeitpunkten berücksichtigt werden, insbesondere ein zeitlicher Verlauf der Messdaten. Wird beispielsweise ein eindimensionales Array von Sensoren im Umfeldsensorsystem, beispielsweise einem Laserscanner, verwendet, werden oft in der Vertikalen defokussierte Einzelsensoren verwendet, mit denen aber dennoch aufgrund ihres bekannten Erfassungsbereichs eine Ortsbestimmung möglich ist. Dazu wird der zeitliche Verlauf der Messdaten betrachtet. Selbstverständlich ist es jedoch im Rahmen des erfindungsgemäßen Verfahrens auch denkbar, ein das Vorfeld komplett über fokussierte Umfeldsensoren abtastendes Umfeldsensorsystem zu verwenden.

Es ist vorgesehen, dass ein die Reflektivitätsinformation enthaltendes Umgebungsmodell verwendet wird. Ein derartiges Modell enthält gleichzeitig Informationen über den Ort und die Reflektivität von Gegenständen/Oberflächen/Punkten im Raum, insbesondere im Vorfeld des Kraftfahrzeugs. Zweckmäßigerweise kann ein umfassendes, alle im Scheinwerfersystem benötigten Umgebungsinformationen enthaltendes Umgebungsmodell verwendet werden, insbesondere ein von allen Umgebungsinformationen nutzenden Fahrzeugsystemen genutztes zentrales Umgebungsmodell. Umgebungsmodelle verschiedenster Art, die insbesondere auch das Vorfeld des Kraftfahrzeugs auf verschiedene Art und Weise beschreiben, sind im Stand der Technik weithin bekannt und müssen hier nicht näher ausgeführt werden. Beispielsweise kann nach Art einer Belegungskarte gearbeitet werden, es ist jedoch auch möglich, tatsächlich zusammengehörige Objekte beziehungsweise Gegenstände, gegebenenfalls mit ihrer Eigengeschwindigkeit, zu erfassen. In allen diesen Fällen ist es nun vorteilhafterweise möglich, die darin enthaltenen Informationen um die Information zur Reflektivität des entsprechenden Objekts/der entsprechenden Position zu ergänzen; es wird erfindungsgemäß also Positionen und/oder Objekten in dem Umgebungsmodell als Reflektivitätsinformation ein Reflektivitätskoeffizient zugeordnet. Bevorzugt ist im erfindungsgemäßen Verfahren tatsächlich ein zentrales Umgebungsmodell, in dem alle Informationen über die Umgebung des Kraftfahrzeugs gesammelt werden, die von den Fahrzeugssystemen, darunter auch das Scheinwerfersystem, benötigt werden. Solche Umgebungsmodelle müssen im Übrigen nicht als dreidimensionale Modell realisiert werden, sondern es sind auch 2,5-dimensionale oder 2,75-dimensionale Modelle denkbar. In den 2,5-dimensionalen Modellen ist neben einer zweidimensionalen Ortsinformation in der Horizontalebene noch eine Höheninformation enthalten, die sich auf das Kraftfahrzeug bezieht, während in 2,75-dimensionalen Modellen ein Höhenbereich verwendet wird.

In weiterer Ausgestaltung der vorliegenden Erfindung kann vorgesehen sein, dass die Ermittlung der Reflektivitätsinformation unter zusätzlicher Berücksichtigung der Daten weiterer Umgebungssensoren, insbesondere einer Kamera, erfolgt. Beispielsweise können Daten eines weiteren Umgebungssensors, insbesondere einer Kamera, zur Plausibilisierung der Reflektivitätsinformation benutzt werden. Es ist also denkbar, zur Ergänzung oder verbesserten Ermittlung der Reflektivitätsinformationen auch Messdaten anderer Umgebungssensoren in Betracht zu ziehen, beispielsweise solcher einer Kamera, die über eine Bildverarbeitung oder dergleichen ausgewertet werden. Sogleich ist eine Plausibilisierung denkbar; es kann überprüft werden, ob als reflektierendes Objekt tatsächlich ein Schild, eine LKW-Plane oder dergleichen auch mit anderen Umgebungssensoren detektierbar ist. Verschiedenste Möglichkeiten zur Informationsfusion sind hier denkbar.

Es sei an dieser Stelle noch angemerkt, dass selbstverständlich auch Informationen über die Relativbewegung eines Objekts in der Umgebung des Kraftfahrzeugs in den Reflektivitätsinformationen berücksichtigt werden, beispielsweise bei einer reflektierenden Plane eines vorausfahrenden LKWs. Werden auch solche Relativgeschwindigkeiten berücksichtigt, kann zum korrekten Zeitpunkt eine Ansteuerung des Scheinwerfersystems so erfolgen, dass dennoch keine Blendung auftritt oder dergleichen.

Scheinwerfersysteme, mit denen eine Veränderung des Ausleuchtbereichs bezüglich der Geometrie beziehungsweise der lokalen Lichtintensität möglich ist, sind weithin bekannt, so dass sie hier nicht näher erläutert werden müssen. Beispielsweise kann vorgesehen sein, Scheinwerfer mit in Matrixform angeordneten Lichtquellen, beispielsweise LEDs, zu verwenden. Auch verschiedenste Sorten von ansteuerbaren und/oder bewegbaren Blenden sind bereits bekannt, beispielsweise Pixelblenden oder Flüssigkristallblenden. Auch eine Verschwenkbarkeit der Scheinwerfer an sich, beispielsweise für ein Kurvenlicht, kann genutzt werden. Relevant ist nur, dass die Möglichkeit besteht, in Reaktion auf die Reflektivitätsinformationen eine Anpassung des Ausleuchtbereichs vorzunehmen.

Neben dem Verfahren betrifft die Erfindung auch ein Kraftfahrzeug, umfassend ein Scheinwerfersystem mit wenigstens einem Scheinwerfer mit einem in der lokalen Lichtintensität veränderbaren Ausleuchtbereich, ein zur Abtastung des Umfelds des Kraftfahrzeugs durch Aufnahme der Reflektion wenigstens eines aktiv ausgesendeten Signals ausgebildetes Umfeldsensorsystem und ein zur Durchführung des erfindungsgemäßen Verfahrens ausgebildetes Steuergerät. Das Steuergerät ist mithin zur Auswertung der Messdaten des Umfeldsensorsystems zur Ermittlung von die Reflektivität wenigstens eines im Umfeld des Kraftfahrzeugs befindlichen Objekts beschreibenden Reflektivitätsinformationen und zur Ansteuerung des Scheinwerfersystems aufgrund der Reflektivitätsinformation ausgebildet. Sämtliche Ausführungen bezüglich des erfindungsgemäßen Verfahrens lassen sich analog auf das erfindungsgemäße Kraftfahrzeug übertragen.

Insbesondere kann, wie oben bereits dargelegt, das Umfeldsensorsystem wenigstens einen Lidarsensor und/oder wenigstens einen Lasersensor und/oder wenigstens einen PMD-Sensor umfassen, wobei auch hier aus den bereits genannten Gründen Lasersensoren und PMD-Sensoren bevorzugt werden.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein erfindungsgemäßes Kraftfahrzeug in einer Prinzipskizze,
- Fig. 2: ein Umfeldsensorsystem, und
- Fig. 3: eine Skizze zum Messprinzip der vorliegenden Erfindung.

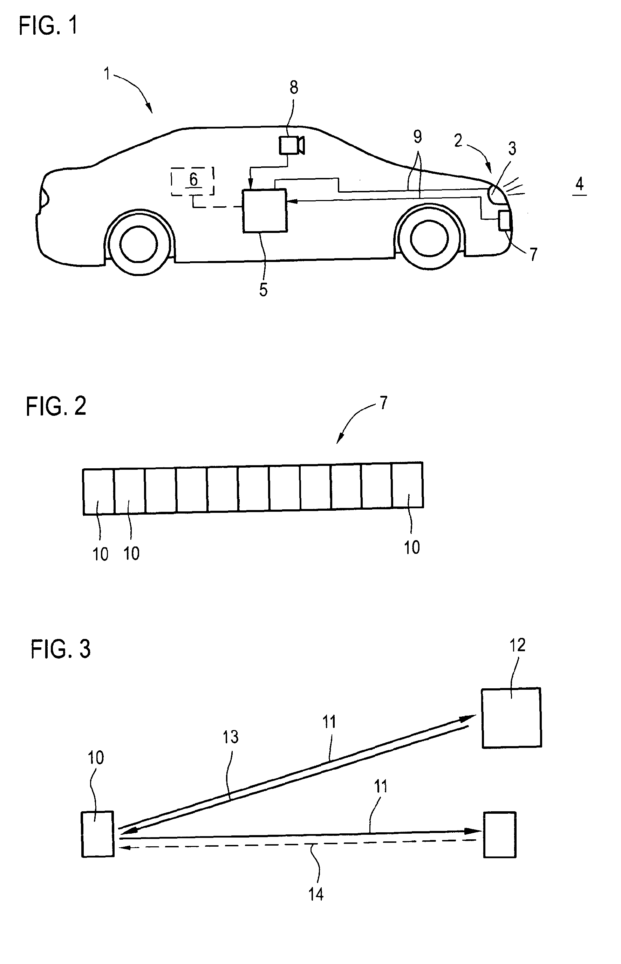

Fig. 1 zeigt ein erfindungsgemäßes Kraftfahrzeug 1. Es umfasst ein Scheinwerfersystem 2 mit zwei Scheinwerfern 3, die ein Fahrlicht im Vorfeld 4 des Kraftfahrzeugs 1 zur Verfügung stellen. Der Ausleuchtbereich der Scheinwerfer 3 ist sowohl in der Geometrie als auch in der lokalen Lichtintensität veränderbar. Dies kann beispielsweise durch einen Aufbau des Scheinwerfers 3 aus mehreren einzelnen, in einer Matrix angeordneten Lichtquellen und/oder bestimmte Blenden und/oder bestimmte verstellbare mechanische Mittel realisiert werden. Zur Ansteuerung der Scheinwerfer 3 des Scheinwerfersystems 2 ist ein Steuergerät 5 vorgesehen. Es sei an dieser Stelle bereits daraufhingewiesen, dass das Steuergerät 5 auch weitere Funktionen erfüllen kann, beispielsweise die Ansteuerung anderer Fahrzeugsysteme 6 (hier nur schematisch angedeutet) oder diverse Berechnungen.

Im vorliegenden Fall empfängt das Steuergerät 5 in jedem Fall Messdaten eines Umfeldsensorsystems 7, welches in Fig. 2 näher dargestellt ist, sowie einer Kamera 8, wobei allerdings auch noch weitere Umfeldsensorik vorgesehen sein kann. Die Datenübertragung im Kraftfahrzeug 1 erfolgt über einen Datenbus 9, hier einen CAN-Bus.

Fig. 2 zeigt das im vorliegenden Ausführungsbeispiel verwendete Umfeldsensorsystem 7 näher. Es handelt sich um einen Array verschiedener horizontal aufeinanderfolgender Lasersensoren 10, die zwar in der horizontalen Ebene fokussiert sind und immer einen bestimmten Bereich abdecken, vertikal jedoch defokussiert sind. Alternativ zu den Lasersensoren können auch beispielsweise PMD-Sensoren verwendet werden; selbstverständlich ist es in anderen Ausführungsbeispielen auch möglich, beispielsweise eine Matrix von einzelnen Sensoren 10 zu verwenden, die auch vertikal fokussiert sind.

Im Steuergerät 5 wird ein zentrales Umfeldmodell verwaltet und aktuell gehalten, welches für die Ansteuerung der Scheinwerfer 3 wie auch für die Ansteuerung anderer Fahrzeugsysteme 6 verwendet werden kann. Dabei dienen vorliegend die Messdaten der Lasersensoren 10 des Umfeldsensorsystems 7 nicht nur der Ermittlung von Entfernungen zu sensierten Oberflächen/Objekten, sondern es wird anhand des Anteils des reflektierten Signals gleichzeitig eine Information über die Reflektivität von Oberflächen ermittelt, wie Fig. 3 beispielhaft erläutert.

Trifft das zur Messung aktiv ausgesandte Signal 11, hier ein Laserimpuls, des Lasersensors 10 auf eine stark reflektierende Fläche, beispielsweise ein Verkehrsschild 12, so wird ein großer Anteil des Signals 11 reflektiert, Pfeil 13, und eine entsprechend hohe Intensität im Lasersensor 10 gemessen. Es wird also nicht nur die Laufzeit aufgenommen, die zur Entfernungsmessung verwendet wird, sondern es wird auch die Intensität des reflektierten Signals betrachtet.

Anders verhält es sich, wie in Fig. 3 unten dargestellt, wenn das ausgesandte Signal 11 auf eine dunkle, schwach reflektierende Oberfläche trifft. Dann wird nur ein geringer Anteil des Signals reflektiert, Pfeil 14. So dient der Lasersensor 10 hier nicht nur als Entfernungssensor, sondern auch als Reflektivitätssensor.

Das Steuergerät 5 ist nun in der Lage, Reflektivitätsinformationen aus den Messdaten des Umfeldsensorsystems 7 zu ermitteln, vorliegend also aus den Abstandsinformationen und den Intensitätsinformationen. Dabei wird aufgrund der in der Vertikalen defokussierten Lasersensoren 10 der zeitliche Verlauf der Messdaten mit berücksichtigt, um die Position verschiedener reflektierender Oberflächen im Raum frühzeitig bestimmen zu können.

Die so ermittelten Reflektivitätsinformationen fließen in das durch das Steuergerät 5 ohnehin verwaltete Umgebungsmodell ein, indem Positionen und/oder Objekten in dem Umgebungsmodell als Reflektivitätsinformation ein Reflektivitätskoeffizient zugeordnet wird. Es sei an dieser Stelle noch angemerkt, dass auch die Daten der Kamera 8 selbstverständlich ohnehin für das Umgebungsmodell verwendet werden; nichtsdestotrotz dienen sie im hier dargelegten Ausführungsbeispiel des erfindungsgemäßen Verfahrens auch zur Plausibilisierung der Reflektivitätsinformationen.

Die Reflektivitätsinformationen werden dann benutzt, um das Scheinwerfersystem 2 entsprechend anzusteuern. Dabei erfolgt die Ansteuerung so, dass eine höhere Lichtintensität, also mehr Licht, auf Flächen mit niedrigerem Reflektivitätskoeffizienten trifft und eine niedrigere Lichtintensität auf Flächen mit höherem Reflektivitätskoeffizienten trifft, wofür entsprechende Kennlinien, gegebenenfalls auch Grenzwerte, verwendet werden können.

So ist es mit dem erfindungsgemäßen Verfahren einfach möglich, eine vorausschauende Ansteuerung des Fahrlichts derart zu erlauben, dass Blendungen des Fahrers vermieden werden und dunkle Objekte besser hervorgehoben werden, indem idealerweise ohnehin vorhandene Umgebungssensorsysteme auch zur Messung der Reflektivität genutzt werden und ein auch für andere Fahrzeugsysteme bestehendes Umgebungsmodell entsprechend erweitert wird.

## Patentansprüche

1. Verfahren zur Steuerung eines Scheinwerfersystems (2) eines Kraftfahrzeugs (1), umfassend wenigstens einen Scheinwerfer (3) mit einem in der lokalen Lichtintensität veränderbaren Ausleuchtbereich,
**dadurch gekennzeichnet,**
**dass** zur Abtastung des Umfelds des Kraftfahrzeugs (1) mit wenigstens einem die Reflektion wenigstens eines aktiv ausgesendeten Signals aufnehmenden Umfeldsensorsystem (7) Messdaten aufgenommen werden, wobei das Signal von einem Umfeldsensor des Umfeldsensorsystems ausgesendet wird, aus den Messdaten die Reflektivität wenigstens eines im Umfeld des Kraftfahrzeugs (1) befindlichen Objekts beschreibende Reflektivitätsinformationen ermittelt werden und die lokale Lichtintensität des Scheinwerfersystems (2) unter Berücksichtigung der Reflektivitätsinformationen angepasst wird, wobei ein die Reflektivitätsinformationen enthaltendes Umgebungsmodell verwendet wird, wobei Positionen und/oder Objekten in dem Umgebungsmodell als Reflektivitätsinformation ein Reflektivitätskoeffizient zugeordnet wird.

2. Verfahren nach Anspruch 1, **dadurch gekennzeichnet, dass** die Anpassung der Lichtintensität so erfolgt, dass eine höhere Lichtintensität auf Flächen mit niedrigerem Reflektivitätskoeffizienten trifft und/oder eine niedrigere Lichtintensität auf Flächen mit höherem Reflektivitätskoeffizienten trifft.

3. Verfahren nach Anspruch 1 oder 2, **dadurch gekennzeichnet, dass** ein wenigstens einen Lidarsensor und/oder wenigstens einen Lasersensor (10) und/oder wenigstens einen PMD-Sensor umfassendes Umfeldsensorsystem (7) verwendet wird.

4. Verfahren nach einem der vorangehenden Ansprüche, **dadurch gekennzeichnet, dass** eine in den Messdaten enthaltene Abstandsinformation zur Ermittlung der Reflektivitätsinformationen berücksichtigt wird.

5. Verfahren nach Anspruch 4, **dadurch gekennzeichnet, dass** zur Ermittlung der Reflektivitätsinformationen, insbesondere bei Verwendung wenigstens eines in einer Raumrichtung defokussierten Sensors, Messdaten zu verschiedenen Zeitpunkten berücksichtigt werden, insbesondere ein zeitlicher Verlauf der Messdaten.

6. Verfahren nach einem der vorangehenden Ansprüche, **dadurch gekennzeichnet, dass** ein umfassendes, alle im Scheinwerfersystem (2) benötigten Umgebungsinformationen enthaltendes Umgebungsmodell verwendet wird, insbesondere ein von allen Umgebungsinformationen nutzenden Fahrzeugsystemen (6) genutztes zentrales Umgebungsmodell.

7. Verfahren nach einem der vorangehenden Ansprüche, **dadurch gekennzeichnet, dass** die Ermittlung der Reflektivitätsinformationen unter zusätzlicher Berücksichtigung der Daten weiterer Umgebungssensoren, insbesondere einer Kamera (8), erfolgt.

8. Verfahren nach Anspruch 7, **dadurch gekennzeichnet, dass** Daten eines weiteren Umgebungssensors, insbesondere einer Kamera (9), zur Plausibilisierung der Reflektivitätsinformationen genutzt werden.

9. Kraftfahrzeug (1), umfassend ein Scheinwerfersystem (2) mit wenigstens einen Scheinwerfer (3) mit einem in der lokalen Lichtintensität veränderbaren Ausleuchtbereich, ein zur Abtastung des Umfelds des Kraftfahrzeugs (1) durch Aufnahme der Reflektion wenigstens eines aktiv ausgesendeten Signal ausgebildetes Umfeldsensorsystem (7) und ein zur Durchführung eines Verfahrens nach einem der vorangehenden Ansprüche ausgebildetes Steuergerät (5).

10. Kraftfahrzeug nach Anspruch 9, **dadurch gekennzeichnet, dass** das Umfeldsensorsystem (7) wenigstens einen Lidarsensor und/oder wenigstens einen Lasersensor (10) und/oder wenigstens einen PMD-Sensor umfasst.

## Claims

1. Method of controlling a headlight system (2) of a motor vehicle (1), comprising at least one headlight (3) with an illumination range changeable in the local light intensity,
**characterised in that**
to scan the environment of the motor vehicle (1), with at least one environment sensor (7) recording the reflection of at least one actively emitted signal, measuring data are recorded, wherein the signal is emitted by an environment sensor of the environment sensor system, from the measuring data reflectivity information describing the reflectivity of at least object located in the environment of the motor vehicle (1) is determined and the local light intensity of the headlight system (2) is adapted taking the reflectivity information into account, wherein an environment model containing the reflectivity information is used, whereby positions and/or objects in the environment model are assigned a reflection coefficient as reflectivity information.

2. Method according to claim 1 **characterised in that** adaptation of the light intensity takes place in such a way that a higher light intensity hits areas with a lower reflectivity coefficient and/or a lower light intensity hits areas with a higher reflectivity coefficient.

3. Method according to claim 1 or 2 **characterised in that** an environment sensor system (7) comprising at least one lidar sensor and/or at least one laser sensor (10) and/or at least one PMD sensor is used.

4. Method according to any one of the previous claims **characterised in that** distance information contained in the measuring data is taken into account in order to determine the reflectivity information.

5. Method according to claim 4 **characterised in that** in order to determine the reflectivity information, in particular when using at least one sensor defocussed in one spatial direction, measuring data are taken into account at various points in time, in particularly a chronological sequence of the measuring data.

6. Method according to any one of the preceding claims, **characterised in that** an environment model containing all the environmental information required in the headlight system (2) is used, in particular a central environment model used by all vehicle systems (6) utilising environmental information.

7. Method according to any one of the preceding claims, **characterised in that** the determination of the reflectivity information takes place taking into account the data of further environment sensors, more particularly a camera (8).

8. Method according to claim 7 **characterised in that** data of a further environment sensor, more particularly a camera (9) is used for making the reflectivity information plausible.

9. Motor vehicle (1) comprising a headlight system (2) with at least one headlight (3) with an illumination range variable in the local light intensity, an environment sensor system (7) designed for sensing the environment of the motor vehicle (1) through recording the reflection of at least one actively emitted signal, and a control device (5) for implementing a method according to any one of the preceding claims.

10. Motor vehicle according to claim 9,
**characterised in that** the
environment sensor system (7) comprises at least one lidar sensor and/or at least one laser sensor (10) and/or at least one PMD sensor.

## Revendications

1. Procédé de commande d'un système de projecteur (2) d'un véhicule automobile (1), comprenant au moins un projecteur (3) avec une zone d'éclairage modifiable quant à son intensité lumineuse locale,
**caractérisé en ce que**, pour analyser l'environnement du véhicule automobile (1), on prélève des données de mesure avec au moins un système de capteur d'environnement (7) recevant la réflexion d'au moins un signal activement émis, le signal étant émis par un capteur d'environnement du système de capteur d'environnement, des informations de réflectivité qui décrivent la réflectivité d'au moins un objet situé dans l'environnement du véhicule automobile (1) étant déterminées à partir des données de mesure et l'intensité lumineuse locale du système de projecteur (2) étant adaptée en tenant compte des informations de réflectivité, un modèle d'environnement qui contient les informations de réflectivité étant utilisé, un coefficient de réflectivité étant associé comme information de réflectivité à des positions et/ou des objets dans le modèle d'environnement.

2. Procédé selon la revendication 1, **caractérisé en ce que** l'adaptation de l'intensité lumineuse s'effectue de telle sorte qu'une intensité lumineuse supérieure arrive sur des surfaces ayant un coefficient de réflectivité inférieur et/ou une intensité lumineuse inférieure arrive sur des surfaces ayant un coefficient de réflectivité supérieur.

3. Procédé selon la revendication 1 ou 2, **caractérisé en ce que** l'on utilise un système de capteur d'environnement (7) comprenant au moins un capteur lidar et/ou au moins un capteur laser (10) et/ou au moins un capteur PMD.

4. Procédé selon l'une des revendications précédentes, **caractérisé en ce que** l'on prend en compte une information de distance contenue dans les données de mesure pour déterminer les informations de réflectivité.

5. Procédé selon la revendication 4, **caractérisé en ce que**, pour déterminer les informations de réflectivité, notamment lors de l'utilisation d'au moins un capteur réalisant une défocalisation dans une direction spatiale, on prend en compte des données de mesure à différents instants, notamment une courbe temporelle des données de mesure.

6. Procédé selon l'une des revendications précédentes, **caractérisé en ce que** l'on utilise un modèle d'environnement global, contenant toutes les informations d'environnement nécessaires dans le système de projecteur (2), notamment un modèle d'environnement central utilisé par tous les systèmes de véhicule (6) exploitant des informations d'environnement.

7. Procédé selon l'une des revendications précédentes, **caractérisé en ce que** la détermination des informations de réflectivité s'effectue en tenant en plus compte des données d'autres capteurs d'environnement, notamment d'une caméra (8).

8. Procédé selon la revendication 7, **caractérisé en ce que** l'on utilise des données d'un autre capteur d'environnement, notamment d'une caméra (9), pour établir la vraisemblance des informations de réflectivité.

9. Véhicule automobile (1), comprenant un système de projecteur (2) avec au moins un projecteur (3) avec une zone d'éclairage modifiable quant à son intensité lumineuse locale, un système de capteur d'environnement (7) conçu pour analyser l'environnement du véhicule automobile (1) en recevant la réflexion d'au moins un signal activement émis et un appareil de commande (5) conçu pour mettre en oeuvre un procédé selon l'une des revendications précédentes.

10. Véhicule automobile selon la revendication 9, **caractérisé en ce que** le système de capteur d'environnement (7) comprend au moins un capteur lidar et/ou au moins un capteur laser (10) et/ou au moins un capteur PMD.
